# EUROPEAN PATENT APPLICATION

(11) **EP 1 106 287 A1**
(43) Date of publication of application: **13.06.2001**
(21) Application number: 99902853.3
(22) Date of filing: 05.02.1999
(51) Int. Cl.: B23B 27/10, B23Q 11/10

(54) **CUTTING DEVICE AND CUTTING WORK METHOD**

(30) Priority: 13.08.1998 JP 22909298
(71) Applicant: Fuji Koeki Co., Ltd, Nagoya-shi, Aichi 467-0851 (JP)
(72) Inventor: ITO, Mitsuru, Fuji Koeki Co., Ltd., Nagoya-shi, Aichi 467-0851 (JP)
(74) Representative: Stippl, Hubert, Dipl.-Ing.
(86) International application number: JP9900536
(87) International publication number: WO0009280

(57) **Abstract**

A cutting device used for the cutting of a work piece (3) using a cutting tool (1) while coating a portion to be cut with cutting oil, comprising an injection port for rake face (5) facing the rake face (7) of the cutting tool (1), an injection port for flank (6) facing a flank (8), and an oil spray generating device, an oil spray flowing out from the oil spray generating device being injected from the injection port for rake face (5) and the injection port for flank (6), whereby cutting work can be made with a minimum oil amount, cleaning of the work becomes easier or unnecessary, and lowering of productivity can be prevented, and further excessive oil is prevented from being blown up around the device and the work environment is prevented from being deteriorated.

## Description

### Technical Field

The present invention relates to a cutting device for cutting a work piece while coating a portion to be cut with cutting oil, and a cutting work method.

### Background Art

Hitherto, in a cutting work using a lathe, etc., a cutting work is carried out while supplying a cutting edge of a cutting tool with a cutting oil. Such an oil supply has an effect of extending the life of a tool by suppressing the abrasion of the cutting edge of the cutting tool, an effect of cooling a cutting portion, an effect of improving the work accuracy, and the like. In order to optimize such effects, various cutting tools have been proposed to date.

For example, a device capable of selecting an optimum oil supply in accordance with the cutting conditions by exchanging jet pieces or a device capable of fine-adjusting the direction of oil supply by allowing the jet piece to rotate, and the like, have been proposed (see JP7 (1995)-266103A, JP7 (1995)-266104A, and JP7 (1995)-266105A).

JP7 (1995)-60507A proposes a cutting tool capable of preventing an oil-supplying path from being clogged with impurities during a cutting work by making a supplying path shorter by reducing the distance between the oil supplying port and the oil injection port.

Furthermore, JP10 (1998)-76404A proposes a cutting tool capable of directly supplying a rake face or a flank with cutting oil exactly by providing a plate member or an oil-supplying piece without providing a concave portion in a flank of the cutting edge chip.

In the above-mentioned conventional cutting tools, it is possible to optimize and secure the effect of extending the lifetime of a tool by supplying oil. In any of these cases, however, since a liquid oil is supplied to the work piece directly, an excessive amount of oil is supplied, so that it takes a long time to remove the excessive oil. As a result, the productivity is lowered.

Furthermore, since the excessive oil is blown up around the device, it is necessary to take an additional measure for improving the deterioration of the work environment.

### DISCLOSURE OF INVENTION

It is an object of the present invention to provide a cutting device and a method, which can carry out a cutting work with a minimum amount of oil and prevent the deterioration of the work environment, by cutting a work piece while coating a portion to be cut with a cutting oil. In order to achieve the above-mentioned object, the present invention provides a cutting device for cutting a work piece by the use of a cutting edge while coating a portion of the work piece to be cut with a cutting oil, including an injection port for a rake face facing the rake face of the cutting edge, an injection port for a flank facing the flank of the cutting edge, and an oil spray generating device, wherein an oil spray flowing out from the oil spray generating device is injected from the injection port for the rake face and the injection port for the flank.

According to such a cutting device, it is possible to suppress the abrasion of the cutting edge and to improve the work accuracy. In addition, the cutting process can be carried out with a minimum amount of oil because the amount of oil supplied to the rake face and the flank is small as compared with the case of directly coating the liquid oil. Namely, since excessive oil is hardly supplied, the cleaning of the work piece becomes easier or unnecessary, and lowering of the productivity can be prevented. Furthermore, since it is possible to prevent the excessive oil from being blown up around the device, and the amount of oil attached to debris is small, the deterioration of the work environment can be prevented.

It is preferable that the oil spray generating device includes an oil spray supplying nozzle for supplying oil spray to the inside of a container, and a spray feeding path for feeding the oil spray to the outside of the container. According to such an oil spray generating device, it is possible to trap an oil spray having a large diameter inside the container. Consequently, since the most of the oil spray in the spray feeding path is fine oil spray, the feeding device has an excellent fast-response property and can feed oil spray rapidly.

Furthermore, it is preferable that the oil spray generating device comprises an under-liquid nozzle having a gas injection port in the oil stored in the container and generating oil spray from the oil, and a spray feeding path for feeding the oil spray to the outside of the container.

According to such an oil generating spray, it is possible to generate oil with a simple structure and to trap oil spray having a large diameter inside the container. Consequently, since the most of the oil spray in the spray feeding path is fine oil spray, the feeding device has an excellent fast-response property and can feed oil spray rapidly.

Furthermore, it is preferable that the hole diameters of the injection port for the rake face and the injection port for the flank are narrower than the hole diameter of the feeding path of the oil spray flown out from the oil spray generating device. According to such a cutting device, the particle size of the oil spray is increased, and the oil spray tends to be attached to the cutting portion easily, thus facilitating the process. Furthermore, the increase in the particle size and the flow speed prevents the diffusion of the oil spray after injected, and the oil spray can be coated intensively on the portion to be cut.

Furthermore, it is preferable that the injection port for the rake face is formed as an exchangeable pin. According to such a cutting device, it is possible to change the diameter of the injection port and the injection direction easily.

Furthermore, it is preferable that the hole diameter of the injection port for the flank is about 1.5 to 2 times the hole diameter of the injection port for the rake face. According to such a cutting device, it is possible to assign a predetermined amount of oil spray generated from the oil spray generating device so that the amount of oil spray to the flank becomes larger and the flow speed to the rake face is increased. Consequently, it is possible to suppress the abrasion on both the rake face and the flank effectively.

Furthermore, it is preferable the cutting device is an NC lathe.

Next, a cutting method of the present invention includes cutting a work piece by the use of a cutting edge while coating a cutting oil to a portion of the work piece to be cut with a cutting oil, wherein the cutting work of the work is carried out while coating an oil spray to the rake face and flank of the cutting edge.

According to such a cutting method, it is possible to suppress the abrasion of the cutting edge and to improve the working accuracy. In addition, the cutting process can be carried out with a minimum amount of oil because the amount of oil supplied to the rake face and the flank is small as compared with the case of directly coating the liquid oil. Namely, since excessive oil is hardly supplied, the cleaning of the work piece becomes easier or unnecessary, and lowering of the productivity can be prevented. Furthermore, since it is possible to prevent the excessive oil from being blown up around the device, and the amount of oil attached to debris is small, the deterioration of the work environment can be prevented.

It is preferable in the above-mentioned cutting method that the cutting work is carried out by the use of a cutting device comprising an injection port for the rake face facing the rake face of the cutting edge, an injection port for the flank facing the flank of the cutting edge, and an oil spray generating device, and an oil spray flowing out from the oil spray generating device is injected from the injection port for the rake face and the injection port for the flank.

Furthermore, it is preferable that the oil spray generating device comprises an oil spray supplying nozzle for supplying oil spray to the inside of a container, and a spray feeding path for feeding the oil spray to the outside of the container. According to such a cutting method and, oil spray generating device, it is possible to trap an oil spray having a large diameter in the container. Consequently, since the most of the oil spray in the spray feeding path is fine oil spray, the feeding device has an excellent fast-response property and can feed oil spray rapidly.

Furthermore, it is preferable that the oil spray generating device comprises an under-liquid nozzle having a gas injection port in the oil stored in the container and generating oil spray from the oil, and a spray feeding path for feeding the oil spray to the outside of the container.

According to such a cutting work method, it is possible to generate oil with a simple structure and to trap oil spray having a large diameter in the container. Consequently, since most of the oil spray in the spray feeding path is fine oil spray, the feeding device has an excellent fast-response property and can feed oil spray rapidly.

Furthermore, it is preferable that the hole diameters of the injection port for the rake face and the injection port for the flank are narrower than the hole diameter of the feeding path of the oil spray flown out from the oil spray generating device. According to such a cutting work method, the particle size of the oil spray is increased, the oil spray tends to be attached to the cutting portion easily, thus facilitating the process. Furthermore, the increase in the particle size and the flow speed prevents the diffusion of the oil spray after injection, and the oil spray can be coated intensively to the portion to be cut.

Furthermore, it is preferable that the injection port for the rake face is formed as an exchangeable pin. According to such a cutting work method, it is possible to change the diameter of the injection port and the injection direction easily.

Furthermore, it is preferable that the hole diameter of the injection port for the flank is about 1.5 to 2 times the hole diameter of the injection port for the rake face. According to such a cutting work method, it is possible to assign a predetermined amount of the oil spray generated from the oil spray generating device so that the amount of oil spray to the flank becomes larger and the flow speed to the rake face is increased. Consequently, it is possible to suppress the abrasion on both the rake face and the flank effectively.

Furthermore, it is preferable that the cutting device is an NC lathe.

### BRIEF DESCRIPTION OF DRAWINGS

Fig. 1 is a plan view showing a cutting work by the use of a cutting device according to one embodiment of the present invention.

Fig. 2 is a view of Fig. 1 seen from the x-direction.

Fig. 3 is a cross sectional view showing an oil spray generating device according to one embodiment of the present invention.

Fig. 4 is a cross sectional view showing a main portion of a cutting toll holder according to one embodiment of the present invention.

### BEST MODE OF CARRYING OUT THE INVENTION

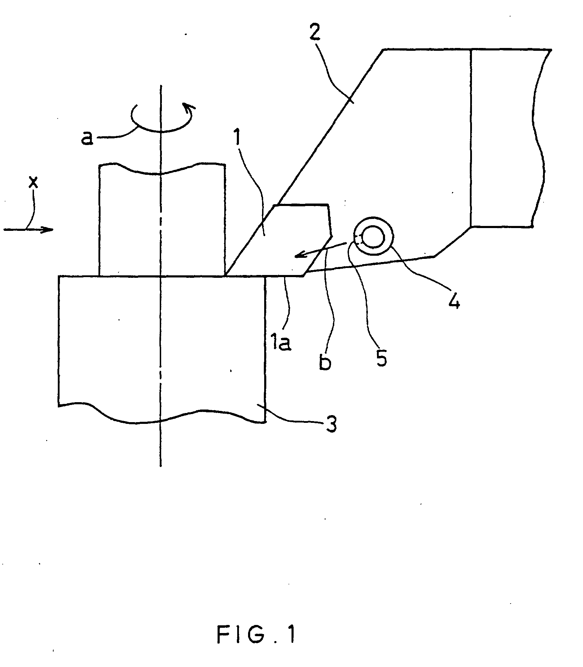

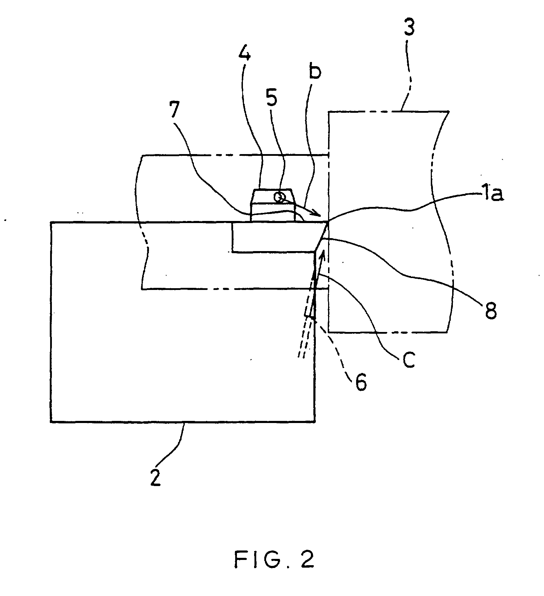

Hereinafter, the present invention will be described by way of embodiments with reference to drawings. In this embodiment, the cutting device according to the present invention is used as a lathe, for example, an NC lathe. Fig. 1 is a plan view showing a cutting work using the lathe of this embodiment. Fig. 2 is a view of the cutting work shown in Fig. 1 seen from the x-direction. Numeral 1 denotes a cutting tool, which is fixed in a cutting tool holder 2 exchangeably by, for example, a screw (not shown). Although not shown, a columnar work piece 3 is allowed to be rotated by a main axis, and the cutting tool holder 2 is fixed by the cutting tool base. Thus, the cutting tool holder 2 can be fed transversely and longitudinally.

As shown in Fig. 1, the columnar work piece 3 is cut by a cutting edge la of the cutting tool 1 while rotating in the direction shown by an arrow a. In Fig. 2, numeral 7 denotes a rake face of the cutting tool 1 and 8 denotes a flank. During a cutting work, debris is generated in the side of the rake face 7. Furthermore, as the cutting work is continued, abrasion progresses both in the rake face 7 and the flank 8. The abrasion of the rake face 7 is caused mainly because of the pressure bonding and diffusion between the debris and the rake face 7. The abrasion of the flank 8 is a mechanical abrasion that occurs mainly because of the friction between the flank 8 and the work piece 3.

In order to extend the lifetime of a tool by suppressing the abrasion, to cool a portion to be cut, and to improve the working accuracy, and the like, oil spray is coated to both the rake face 7 and the flank 8 during the cutting work.

Oil spray denotes an oil particulate. As the particle size of the oil spray becomes smaller, the oil spray attains the form of fume so that it can drift in the air. On the contrary, within the predetermined range, as the particle size becomes larger, the oil spray tends to be attached to the work piece or tool.

The oil spray is coated to the rake side 7 by injecting the oil spray from the injection port 5 for the rake face (in the direction shown by an arrow b in Figs. 1 and 2). The injection port 5 for the rake face is formed at a pin 4, and by exchanging this screw-in type pin 4 with a different one, the diameter of the injection port or the injecting direction can be changed easily.

The oil spray is coated to the flank 8 by injecting the oil spray from the injection port 6 for the flank (in the direction shown by an arrow c in Fig. 2). The injection port 6 for the flank is formed on the side part of the cutting tool holder 2 by processing the cutting tool holder 2.

As compared with the case where the liquid oil is coated directly, the amount of the oil supplied to the rake face 7 and the flank 8 is extremely small. Consequently, the cutting work can be carried out with a minimum necessary amount of oil. In other words, since excessive oil is hardly supplied, the cleaning of the work piece is easy or unnecessary, and the deterioration of the productivity can be prevented. Furthermore, since it is possible to prevent the excessive oil from being blown up around the device and the amount of the oil attached to the debris is small, the work environment can be prevented from being deteriorated.

Thus, by carrying out the cutting work while coating oil spray, it is possible to suppress the abrasion of the cutting tool 1 and to improve the work accuracy, as well as it is possible to prevent the deterioration of the productivity or the deterioration of the work environment.

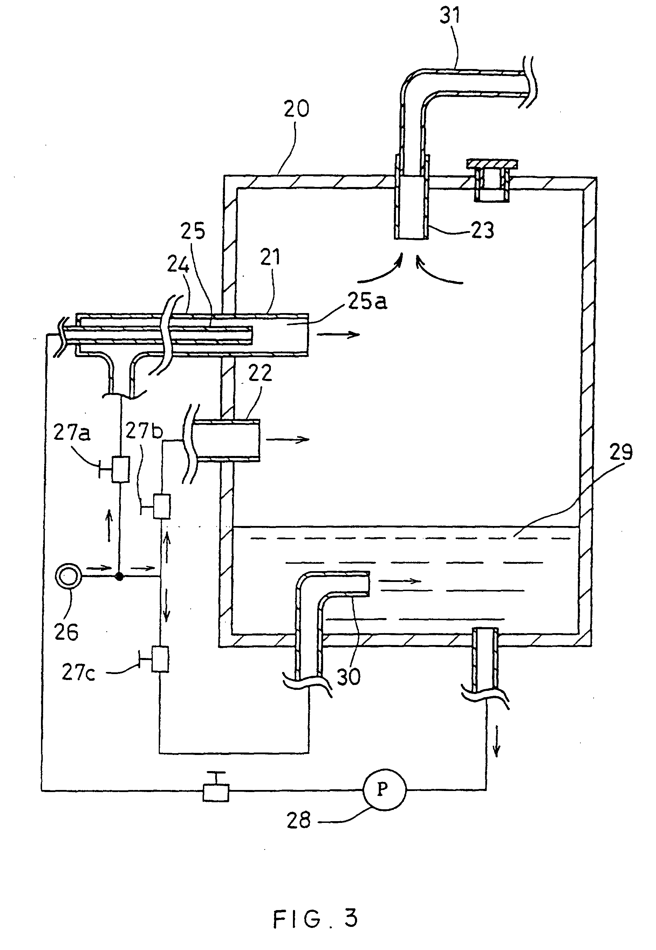

Hereinafter, the oil spray generating device will be explained. Fig. 3 is a cross sectional view showing an example of the oil spray generating device. A spray injection nozzle 21 has a double tube structure including a gas tube 24 and an oil tube 25 that passes through the gas tube 24. The gas tube 24 is connected to a gas source 26 and can regulate the injecting amount of gas by a gas flow rate regulating valve 27a. At the nozzle tip 25a, oil supplied from the oil pump 28 and gas supplied from the gas source 26 are mixed to be formed into an oil spray. The thus formed oil spray is injected into a container 20.

The gas injection nozzle 22 is connected to the gas source 26, can regulate the injecting amount of gas by a gas flow rate regulating valve 27b, and can regulate the flow speed of the oil spray at the final exit portion. When the internal pressure necessary to the container 20 can be secured, the gas injection nozzle 22 may not be provided.

An under-liquid nozzle 30 is immersed in oil 29. The injecting amount of gas can be regulated by a gas flow rate regulating valve 27c. When the gas is injected into the oil 29 from the under-liquid nozzle 30, the oil 29 is splashed and entrained by this injected gas, and spray-diffused from the surface of the oil as an oil spray.

Air pressure from the spray injection nozzle 21, the gas injection nozzle 22 and the under liquid nozzle 23 is applied to the inside of the container 20, so that the fine oil spray staying in the container 1 is affected by the pressure and is fed toward a spray inflowing pipe 23.

The oil spray having a large particle size or an oil droplet, which tends to drop by gravity toward the liquid surface of the oil 29, is hardly affected by the air pressure, and most of the oil spray that flows inside the spray feeding tube 31 is a fine oil spray. Therefore, the oil spray can be fed rapidly, and hardly is attached to the inner wall face of the tube. Accordingly, even if the distance to the target object to which oil is supplied becomes longer and the pipe length of the feeding pipe is increased, it is possible to allow the oil spray to pass through the feeding pipe in a short time. Thus, the oil spray inside the spray feeding tube 31 is fed toward to the cutting tool holder 2.

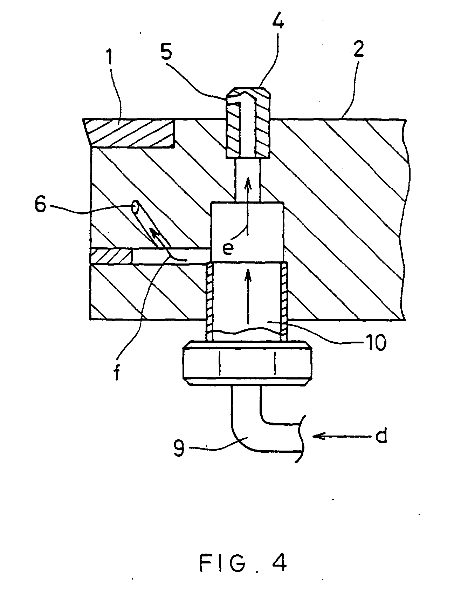

Hereinafter, the flow of the oil spray after it is fed to the cutting tool holder 2 will be explained with reference to Fig. 4. Fig. 4 is a cross-sectional view showing a main portion in the longitudinal direction of the cutting tool holder. The oil spray flowing from the oil spray generation device is fed in the direction shown by an arrow d and reaches the oil spray feeding path 10 inside the cutting tool holder 2 via an oil spray feeding tube 9.

Furthermore, the oil spray is divided into the directions shown by an arrow e and the direction shown by an arrow f, and each is injected from the injection port 5 for the rake face or the injection port 6 for the flank. Herein, the hole diameters of the injection port of the rake face 5 and the injection port of the flank 6 are narrower than the hole diameter of the oil spray feeding path 10. The flow speed of the oil spray is increased by passing through the injection ports 5 and 6 each having a narrower hole diameter. The increase in the flow speed increases the particle size of the oil spray.

The oil spray is generated so as to have a large particle size because the oil spray supplied from the oil spray generating device is a fine oil spray whose hole diameter is selected, that is, an oil spray having a size so that it can drift in the air in the form of fume, and thus, even if the oil spray is injected as it is, most of them are not attached to the work piece. Therefore, by narrowing the hole diameter of the injection ports 5 and 6 and by increasing the particle size of the oil spray, the oil spray is attached to the work piece and a cutting tool easily, and thus the work is carried out smoothly.

Furthermore, the increase of the particle size and the flow speed makes it possible to prevent the diffusion of the oil spray after injection and to coat the oil spray intensively to a portion to be cut. However, if the hole diameter of the oil spray feeding path itself is small, or the particle size is such that oil spray can be attached to the cutting portion before reaching the injection port, it is not necessary to narrow the hole diameter of the injection port.

Herein, the hole diameter of the injection port 6 for the flank is preferably about 1.5 to 2 times that of that of the injection port 5 for the rake face. The following is a reason for the above. In general, the cutting tool is a super hard tool, and in this case, a flank abrasion occurs on the flank of the cutting tool and a crater abrasion occurs on the rake face.

The flank abrasion is a mechanical abrasion mainly caused by the abrasion between the flank and work piece. The crater abrasion, which is called a thermal abrasion or a diffusion abrasion, is an abrasion mainly caused by the pressure bonding and diffusion between the debris and the rake face. The crater abrasion is affected by a temperature of the cutting edge of the cutting tool. Furthermore, in general, the width of the flank abrasion is larger than the depth of the crater abrasion.

Thus, it is necessary to coat a larger amount of oil spray to the flank having greater abrasion than the rake face. On the rake face that is susceptible to a temperature, it is necessary to enhance the cooling effect by increasing the coating speed of the oil spray. Furthermore, when the continuous cutting is carried out, debris is always left on the rake face. Also for coating the rake face with the oil spray effectively, it is necessary to increase the speed of coating the oil spray to the rake face.

As mentioned above, by setting the hole diameter of the injection port 6 of the flank to be about 1.5 to 2 times that of the injection port 5 of the rake face, it is possible to assign the predetermined amount of oil spray generated from the oil spray generating device so that the flow amount is increased and the flow speed to the rake face is increased.

In the above-mentioned embodiment, there is only one injection port for the flank. However, the cutting tool having an end cutting edge and a side cutting edge may be provided with a plurality of oil spray injection ports so that the oil spray can be injected onto the both of end flank and side flank.

Furthermore, in the oil spray generating device described in the above-mentioned embodiment, it is preferable that the device is provided with both the spray injection nozzle and the under-liquid nozzle when a large amount of heat generated and a large amount of oil supply are required in a case such as a high speed and heavy cutting work. However, a spray injection nozzle 2 may not be provided depending upon the application of use. On the contrary, the under-liquid nozzle 4 may not be provided.

Furthermore, in this embodiment, when oil is supplied to the spray injection nozzle, an oil pump is used. However, instead of an oil pump, a siphon method may be employed.

Furthermore, in the above-mentioned oil spray device, for selecting the particle size of the oil spray, after the oil spray is injected or generated in the container, then the oil spray flows to the outside of the container. However, the oil spray generated by the siphon method or double tube method may be led directly to the injection port of the rake face or the injection port of the flank.

As mentioned above, according to the cutting device and cutting method of the present invention, by carrying out the cutting work while coating the oil spray to the rake face and flank of the cutting edge, the abrasion of the cutting edge is suppressed and the work accuracy can be improved. In addition, since the small amount of oil is supplied to the rake face and flank, the cutting work can be carried out with a minimum amount of oil. Since excessive oil is hardly supplied, the cleaning of the work piece becomes easy or unnecessary. Thus, it is possible to prevent the deterioration of the productivity. Furthermore, it is possible to prevent the excessive oil from being blown up around the device, or attached to the debris, and thus the deterioration of work environment can be prevented.

### Industrial Applicability

As mentioned above, according to the cutting device and cutting method of the present invention, the abrasion can be suppressed or the working accuracy can be improved. In addition, it is possible to prevent the deterioration of work environment due to the cleaning of the work piece and to prevent the excessive oil from being blown up around the device. Therefore, it is possible to use this device and the method for cutting work by the use of a lathe, etc. for cutting the work piece while supplying the cutting edge of the cutting tool with a cutting oil.

## Claims

1. A cutting device for cutting a work piece by the use of a cutting edge while coating a portion to be cut of the work piece with a cutting oil, comprising
an injection port for a rake face facing the rake face of the cutting edge,
an injection port for a flank facing the flank of the cutting edge, and
an oil spray generating device,
wherein an oil spray flowing out from the oil spray generating device is injected from the injection port for the rake face and the injection port for the flank.

2. The cutting device according to claim 1, wherein the oil spray generating device comprises an oil spray supplying nozzle for supplying oil spray to the inside of a container, and a spray feeding path for feeding the oil spray to the outside of the container.

3. The cutting device according to claim 1, wherein the oil spray generating device comprises an under-liquid nozzle having a gas injection port in the oil stored in the container and generating oil spray from the oil, and a spray feeding path for feeding the oil spray to the outside of the container.

4. The cutting device according to claim 1, wherein the hole diameters of the injection port for the rake face and the injection port for the flank are narrower than the hole diameter of the feeding path of the oil spray flowing out from the oil spray generating device.

5. The cutting device according to claim 1, wherein the injection port for the rake face is formed as an exchangeable pin.

6. The cutting device according to claim 1, wherein the hole diameter of the injection port for the flank is about 1.5 to 2 times the hole diameter of the injection port for the rake face.

7. The cutting device according to claim 1, wherein the cutting device is an NC lathe.

8. A cutting method comprising cutting a work -piece by the use of a cutting edge while coating a cutting oil to a portion of the work piece to be cut with a cutting oil, wherein the cutting work of the work piece is carried out while coating an oil spray to the rake face and flank of the cutting edge.

9. The cutting method according to claim 8, wherein the cutting work is carried out by the use of a cutting device comprising an injection port for the rake face facing the rake face of the cutting edge, an injection port for the flank facing the flank of the cutting edge, and an oil spray generating device, and an oil spray flowing out from the oil spray generating device is injected from the injection port for the rake face and the injection port for the flank.

10. The cutting method according to claim 9, wherein the oil spray generating device comprises an oil spray supplying nozzle for supplying oil spray to the inside of a container, and a spray feeding path for feeding the oil spray to the outside of the container.

11. The cutting method according to claim 9, wherein the oil spray generating device comprises an under-liquid nozzle having a gas injection port in the oil stored in the container and generating oil spray from the oil, and a spray feeding path for feeding the oil spray to the outside of the container.

12. The cutting method according to claim 9, wherein the hole diameters of the injection port for the rake face and the injection port for the flank are narrower than the hole diameter of the feeding path of the oil spray flowing out from the oil spray generating device.

13. The cutting method according to claim 9, wherein the injection port for the rake face is formed as an exchangeable pin.

14. The cutting method according to claim 9, wherein the hole diameter of the injection port for the flank is about 1.5 to 2 times as the hole diameter of the injection port for the rake face.

15. The cutting method according to claim 9, wherein the cutting device is an NC lathe.
